# EUROPEAN PATENT SPECIFICATION

(11) **EP 4 098 986 B1**
(45) Date of publication and mention of the grant of the patent: **14.08.2024**
(21) Application number: 21177828.7
(22) Date of filing: 04.06.2021
(51) Int. Cl.: G06F 3/0346, G01K 1/022, G01K 1/024, G01K 3/00

(54) **CONFIGURING TEMPERATURE MONITORING OPERATION OF SENSOR DEVICE**
KONFIGURATION DES TEMPERATURÜBERWACHUNGSBETRIEBS EINER SENSORVORRICHTUNG
CONFIGURATION DU FONCTIONNEMENT DE LA SURVEILLANCE DE LA TEMPÉRATURE D'UN DISPOSITIF CAPTEUR

(43) Date of publication of application: 07.12.2022
(73) Proprietor: MeshWorks Wireless Oy, 33900 Tampere (FI)
(72) Inventor: KYRÖLÄ, Marko, 33900 Tampere (FI); REIS, Ilkka, 33900 Tampere (FI)
(74) Representative: Berggren Oy

(56) References cited:
- EP-A1- 3 674 676
- WO-A1-2013/067816
- JP-A- 2002 188 916
- US-A- 4 899 297
- US-A1- 2007 285 238
- US-A1- 2018 003 572
- US-A1- 2018 063 999
- US-A1- 2020 288 218

## Description

### TECHNICAL FIELD

The present invention relates to configuring a temperature monitoring operation of a sensor device.

### BACKGROUND

Temperature-sensitive products may be monitored, e.g. to manage the temperature within a desired temperature range and/or to identify or prevent the occurrence of undesirable temperature conditions.

US20180003572 A1 discloses a temperature measurement device for monitoring the temperature of a temperature-sensitive product, e.g., a blood product. Flexible algorithms can be used to automatically adjust the device to various environmental conditions and/or product-specific regulations.

Transportations of temperature-sensitive products may be exposed to challenging environmental conditions during transportation such as being exposed to water, humidity and/or temperatures over a large scale. Therefore, monitoring of the transportation of the temperature sensitive products should be designed specific to requirements of the transported products. Product specific regulations may define acceptable environmental conditions during the transportation of a product. The acceptable environmental conditions may cover only a part of the whole range of environmental conditions a sensor device can endure. Therefore, the sensor device should be configurable to perform monitoring based on the product specific regulations in order to determine, whether the product specific regulations have been satisfied during the transportation. However, configuring the sensor device using buttons that pass through the housing of the sensor device could reduce reliability of the sensor device against harsh environmental conditions, e.g. water, humidity and frost.

The European Search Report has cited the following references:
US20180003572A1 discloses sensor-based systems and methods for monitoring temperature sensitive products.
US20070285238A1 discloses an rfid sensor tag with manual modes and functions.
WO2013067816A1 discloses a wireless temperature monitoring system.
US20200288218A1 discloses sensor monitoring and sensor-related calculations.
US20180063999A1 discloses a monitoring apparatus.
JP2002188916A discloses a temperature sensor with inclined switch.
EP3674676A1 discloses a calibration structure for calibrating a temperature sensor and method for same.
US4899297A discloses automatically testing temperature measuring devices.

### SUMMARY

The scope of protection sought for the invention is set out by the independent claims. The embodiments, examples and features, if any, described in this specification that do not fall under the scope of the independent claims are to be interpreted as examples useful for understanding various embodiments of the invention.

According to some aspects, there is provided the subject matter of the independent claims. Some further aspects are defined in the dependent claims. The embodiments that do not fall under the scope of the claims are to be interpreted as examples useful for understanding the disclosure.

### BRIEF DESCRIPTION OF THE DRAWINGS

Fig. 1 illustrates an example of a system in accordance with at least some embodiments;
Figs. 2, 3, 4, 5 and 6 illustrate examples of methods in accordance with at least some embodiments,
Fig. 7 illustrates an example of configuring a temperature monitoring operation of a sensor device by installing configuration to the sensor device in accordance with at least some embodiments;
Fig. 8 illustrates an example of configuring a temperature monitoring operation of a sensor device by tilting the sensor device in accordance with at least some embodiments;
Fig. 9 illustrates an example of a user interface of a sensor device in accordance with at least some embodiments;
Fig. 10 illustrates a block diagram of a sensor device in accordance with at least some embodiments; and
Fig. 11 illustrates a block diagram of a user device in accordance with at least some embodiments.

### DETAILED DESCRIPTION

There is provided a user device and sensor device for temperature regulated transportation. The sensor device is configured in a configuration mode by installing a configuration received over wireless communications or by adjusting one or more configuration values based on a tilt of the sensor device. The installation phase or configuration phase is displayed by the sensor device. The user device can read the information displayed by the sensor device and transmit the configuration of the sensor device to a backend system for verification.

Configuration of a sensor device may comprise one or more configuration values for a temperature monitoring operation. Configuration of the sensor device provides that occurrences of undesirable temperature conditions may be detected. Examples of the undesirable temperature conditions comprise at least temperatures that do not meet, or are against, product specific regulations. In an example, the temperature monitoring operation may be performed during a temperature regulated transportation. The configuration of the sensor device may be computer readable data and stored on a computer readable medium, for example a memory device. The configuration of the sensor device may be transferred between devices over a communications channel, for example by way of wireless communications. One or more configuration values of the configuration may be adjustable such that the configuration may be changed based on adjusting the values. In an embodiment, the configuration or the one or more configuration values comprise at least one of a threshold temperature, a minimum temperature threshold, a maximum temperature threshold and an initial delay for the temperature monitoring operation. The threshold temperature, minimum temperature threshold and maximum temperature threshold define threshold values for temperature readings obtained by measuring temperature by a sensor device. The temperature monitoring may be performed based on comparing one or more temperature readings obtained by the sensor device with one or more of the threshold temperature, minimum temperature threshold and maximum temperature threshold. The initial delay provides that after a temperature monitoring operation is started, comparing temperature readings with the threshold values may be deferred. The initial delay provides time for the sensor device to acclimatize to the monitored environment. In this way, even if a temperature during acclimatization of the sensor device would meet the threshold temperature, minimum temperature threshold and maximum temperature threshold, this would not be notified to the user.

Examples of products, whose temperature monitoring may be needed by a sensor device comprise blood contained in a bag or other packaging, vaccines, pharmacologic agents, proteins, spinal fluid, bile, urine, breast milk, any other biofluids, chemicals, food, perishable items, or any other suitable liquids, gasses, and solids.

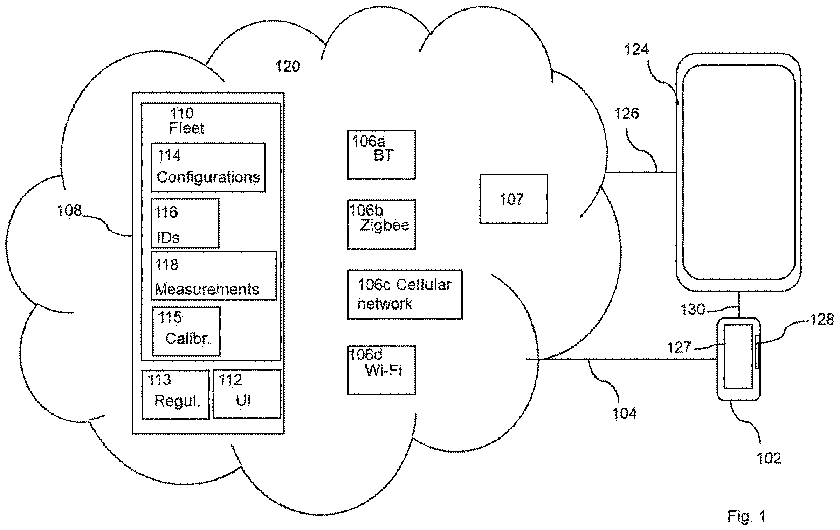

Fig. 1 illustrates an example of a system in accordance with at least some embodiments. The system comprises a sensor device 102, one or more wireless communications systems 106a, 106b, 106c, 106d for communications with the sensor device and a user device 124 over one or more wireless communications channels 104,126, and a backend system 108 connected to the one or more wireless communications systems 106a, 106b, 106c, 106d. The backend system 108 and the wireless communications systems may be connected to a data communications network 120, e.g. the Internet. The data communications network may comprise one or more routers 107 for routing data between the backend system, the wireless communications systems and the user device and the sensor device connected to the data communications network by the wireless communications systems. The user device and the sensor device may be connected with the one or more wireless communications systems over the one or more wireless communications channels 104, 126. It should be noted that a wireless communications channel 126 between the user device and the one or more wireless communications systems 106a, 106b, 106c, 106d and a wireless communications channel 104 between the sensor device and the one or more wireless communications systems may be provided by the same wireless communications system or different wireless communications systems. When the wireless communications channels are provided by the same wireless communications system, the wireless communications channels may utilize at least partially the same communications resources and even the same wireless communications channel may be used.

Examples of the one or more wireless communications systems 106a, 106b, 106c, 106d comprise cellular communications systems, wireless local area networks, and wireless links. The wireless communications channel 104, 126 may be a communications channel over radio frequency connection, or a communications channel utilizing visible light and/or non-visible light. Examples of technologies for wireless radio frequency connections comprise Bluetooth, Zigbee, Wi-Fi and cellular networks according to the 3rd, 4th and 5th Generation of standards defined by the 3rd Generation Partnership Project (3GPP). The one or more communications systems may comprise one or more routers for connecting the one or more wireless communications systems with the backend system 108. Examples of connections between the routers and the backend system comprise wired connections, e.g. based on Ethernet technology, and/or wireless connections, e.g. wireless Radio Frequency links.

The backend system provides verifying configurations 114 of sensor devices against product specific regulations. In this way temperature monitoring operations performed by the sensor devices based on the configurations 114 may be verified to conform with the product specific regulations. The verification may be performed specific to each sensor device based on a configuration of the sensor device. The configuration may be received from a user device 124 after the configuration has been installed to the sensor device and/or configuration values of the sensor device have been adjusted. Provided the configuration received from the sensor device meet the requirements of the product specific regulations or match with the product specific regulations of one or more products, whose temperature is monitored by the sensor device, the backend system may verify the configuration of the sensor device. In an example, a configuration may be verified, provided the configuration comprises configuration values that comprise a threshold temperature, a minimum temperature threshold and/or a maximum temperature threshold that satisfy the product specific regulations. For trrexample, the threshold temperature, minimum temperature threshold and/or maximum temperature threshold may be defined by the product specific regulations or within temperature ranges defined by the product specific regulations. In an example, if calibration information 115 of the sensor device is outdated, the backend system may determine that the configuration of the sensor is not valid and or not to verify the configuration of the sensor device.

In an example, the backend system may comprise fleet information 110 of the sensor devices. The fleet information may comprise information specific to one or more sensor devices that form a fleet of sensor devices. In this way a plurality of sensor devices may be managed and their configurations may be verified. The information specific to each sensor device may comprise a configuration 114 of the sensor device, identifier 116 of the sensor device, measurement results of measurements 118 performed by the sensor device and calibration information 115 of the sensor device. The configuration 114 of the sensor device may comprise one or more configuration values that may comprise at least one of a threshold temperature, a minimum temperature threshold, a maximum temperature threshold and an initial delay for a temperature monitoring operation. The threshold temperature, minimum temperature threshold and maximum temperature threshold define threshold values for temperature readings obtained by measuring temperature by a sensor device. The temperature monitoring may be performed based on comparing one or more temperature readings obtained by the sensor device with one or more of the threshold temperature, minimum temperature threshold and maximum temperature threshold. The initial delay provides that after a temperature monitoring operation is started, comparing temperature readings with the threshold values may be deferred. The initial delay provides time for the sensor device to acclimatize to the monitored environment. In this way, even if a temperature during acclimatization of the sensor device would meet the threshold temperature, minimum temperature threshold and maximum temperature threshold, this would not be notified to the user, e.g. by causing an alarm. The measurement results of measurements 118 performed by the sensor device may comprise measurements of temperature, i.e. temperature measurements. The temperature measurements may be received from the sensor device based on temperature measurements performed by the sensor device during a transportation of temperature regulated products. The calibration information 115 may comprise a date of calibration of a sensor device, calibration conditions, e.g. temperatures and/or humidity, under which the sensor device has been subjected during the calibration and readings, or measurement results, of the sensor device, e.g. temperature and/or humidity measurement readings, when the sensor device was subjected to the calibration conditions. In an example, if the calibration information is outdated, too old, e.g. over two years old, the backend system may determine that the configuration of the sensor is not valid, or not to verify the configuration of the sensor device. In this way a reliability of a temperature monitoring operation of the temperature regulated transportation using the sensor device may be supported.

The backend system may further comprise one or more product specific regulations 113 that should be followed during a temperature regulated transportation of the products. Examples of the product specific regulations comprise one or more limits, i.e. monitoring limits, for quantities that are measured by sensor devices during a temperature regulated transportation. Examples of the monitoring limits comprise a threshold temperature, a minimum temperature threshold, a maximum temperature threshold. The measured quantities should be maintained within the monitoring limits during the temperature regulated transportation of the products.

The backend system may further comprise a User Interface (III) component 112 for interacting with one or more users. The UI component may provide an interface that may be connected over a data transfer connection by a user device 124, whereby a user of the user device may interact with the backend system via a UI of the user device. The data transfer connection may be a wired or wireless connection to the data communications network 120, where the backend system is deployed. Examples of interactions with one or more users comprises output of information by the UI component from the backend system to the user device and/or input of information by the UI component from the user device to the backend system. Examples of information output by the UI component comprises information indicating a successful installation of a configuration of a sensor device, information indicating an unsuccessful installation of a configuration of a sensor device, information indicating a successful configuration of a sensor device, information indicating an unsuccessful configuration of a sensor device, information indicating a verified configuration of a sensor device and information indicating a non-verified configuration of a sensor device.

The sensor device may comprise a user interface, e.g. a display device 127, and an input device 128 configured to receive tactile user input. The sensor device may comprise a processor operatively connected to the input device and the display device. In example in accordance with at least some embodiments, the input device is arranged on an outer surface of a housing of the sensor device and separated by the housing from inside of the sensor device. Accordingly, the input device may be operatively connected with the processor by a way of a wireless interaction with the processor through the housing of the sensor device. In this way the input device does not need a through-hole through the housing, whereby reliability of the sensor device against harsh environmental conditions may be supported. In example in accordance with at least some embodiments, the input device is a slide switch coupled by an inductive coupling or a magnetic coupling to inside of the housing comprising the processor.

The sensor device 102 and the user device 124 may be configured to communicate over a wireless communications channel 130 utilizing a wireless spectrum over the range of visible light and/or non-visible light, utilizing wireless radio frequencies, e.g. by short-range wireless radio communications, or utilizing soundwaves. The wireless communications channel 130 may be a direct communications channel, or a device-to-device connection, between the sensor device 102 and the user device 124, without intermediate devices. The soundwaves may comprise audible soundwaves and/or inaudible soundwaves. In an example the user device may comprise a wireless transmitter configured for communications of visible light and/or for communications of non-visible light, and the sensor device comprises a receiver configured for communications of visible light and/or for communications of non-visible light. Utilizing soundwaves for communications provides that data, or information, may be receivable, provided the receiver for communications of light has a line-of-sight with a source, or a wireless transmitter, of light. For example, a single receiver or a plurality of receivers may be enclosed inside a light insulated space, e.g. a room, chamber or container, and a transmitter for communications of light may be arranged inside the light insulated space. In this way security of the communications may be supported. In another example, the user device may comprise a wireless transmitter configured for short-range wireless radio communications, and the sensor device comprises a receiver configured for short-range wireless radio communications. Utilizing the short-range wireless radio communications provides that data, or information, may be receivable, provided the receiver is withing a range of short-range wireless radio communications from the wireless transmitter. In this way security of the communications may be supported. Examples of technologies for the short-range wireless radio communications comprise at least Bluetooth, Zigbee and Wi-Fi. In a further example, the user device may comprise a transmitter for communications of soundwaves, e.g. a loudspeaker or other transducer for generating soundwaves, and the sensor device may comprise a receiver for communications of soundwaves, e.g. a microphone. In this way the sensor device and the user device may communicate using soundwaves travelling the medium between the user device and the sensor device. Utilizing soundwaves for communications provides that data, or information, may be receivable, provided the receiver for the soundwaves is within a range of the soundwaves. For example, a single receiver or a plurality of receivers may be enclosed inside a sound insulated space, e.g. a room, chamber or container, and a wireless transmitter for communications of soundwaves may be arranged inside the sound insulated space. In this way security of the communications may be supported. It should be noted that communications between the sensor device 102 and the user device 124 may be performed alternatively or additionally via one or more of the wireless communications systems 106, 106b, 106c, 106d and the data communications network 120.

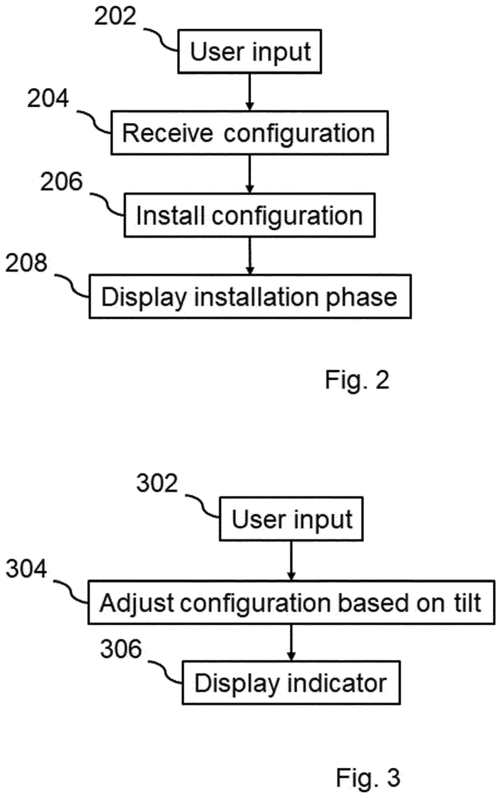

Figs. 2, 3, 4, 5 and 6 illustrate examples of methods in accordance with at least some embodiments. Referring to Fig. 2 the method may be performed by a sensor device described with Fig. 1. The method provides configuring the sensor device without necessarily using or needing any buttons on the sensor device after the sensor device is in configuration mode. The sensor device may comprise an input device configured to receive tactile user input, a display device and a processor operatively connected to the input device and the display device, whereby phases of the method may be caused by the processor.

Phase 202 comprises receiving a tactile user input by the user input device. The sensor device may enter into a configuration mode for configuring a temperature monitoring operation of the sensor device, in response to receiving the tactile user input. Examples of the tactile user input comprise a touch of the user, a press of the user input device by the user and/or a slide of the user input device by the user. The slide of the user input device may be received by the user input device that is a slide switch for example.

According to the invention, in phase 202, the sensor device may have at least two operation modes: a configuration mode and another operation mode that may be referred to for example a normal operation mode. The configuration mode may provide that the sensor device may be configured for a temperature monitoring operation and the normal operation mode may provide that the temperature monitoring operation may be initiated and performed in accordance with the configuration of the sensor device in the configuration mode. The configuration mode may be entered by the sensor device from the normal operation mode and the sensor device may exit the configuration mode back to the normal operation mode. It should be noted that the sensor device may have further operation modes, whereby the operation mode preceding the configuration mode and/or succeeding the configuration mode may be different than the normal operation mode. However, as a difference between the configuration mode and other operation modes the configuration mode is characteristic in that the configuration mode provides installing the configuration of the sensor device and/or adjusting one or more configuration values of the sensor device. The installed configuration and the adjusted configuration values may be stored in a memory of the sensor device, where they may be read by one or more software applications executed by the sensor device at least during the temperature monitoring operation for executing one or more functionalities described herein. Moreover, it should be noted that the sensor device may have more than one configuration mode, whereby the sensor device may have at least three operation modes, two of which are configuration modes and one of which is a normal operation mode that provides that the temperature monitoring operation may be initiated and performed in accordance with the configuration of the sensor device determined using the configuration modes.

Phase 204 comprises receiving a configuration for the temperature monitoring operation. The sensor device may comprise a receiver for wireless communications operatively connected to the processor and the configuration may be received by the receiver over a wireless communications channel. The configuration may be received for example from a user device.

Phase 206 comprises installing the received configuration. In an example, the installation may comprise a write operation of the received configuration to a memory of the sensor device. Examples of the installation phase comprise a completed installation of the configuration and an uncompleted, or a partial, installation of the configuration.

In an example a completed installation of the configuration may comprise that the whole configuration has been written to the memory. In an example an uncompleted installation of the configuration may comprise that a part of the configuration has been written to the memory.

Phase 208 comprises displaying information indicating at least one installation phase of the received configuration. In this way the at least one installation phase may be read by a user and/or by a user device.

In an example in accordance with at least some embodiments, phase 208 comprises that the information indicating the at least one installation phase, comprises at least one of an identifier of the sensor device, an indicator for an updated configuration for the temperature monitoring operation and one or more configuration values for the temperature monitoring operation.

In an example, phase 208 comprises determining that the configuration has been installed based on a successful write operation of the received configuration to a memory of the sensor device.

According to the invention, phase 208 comprises generating an optical code based on an installation phase of the sensor device. In this way the optical code may serve for information indicating the installation phase. According to the invention, the optical code comprises a bar code or a QR-code. The installation phase comprises one of a completed installation of the configuration and an uncompleted, or a partial, installation of the configuration. In an example in accordance with at least some embodiments, phase 204 comprises that the receiver is a receiver or transceiver for communications of visible light and/or non-visible light, for short-range wireless radio communications and/or for communications of soundwaves. In an example, the configuration is encoded for communications using visible light, non-visible light, short-range wireless radio communications, audible soundwaves and/or inaudible soundwaves. A camera flash light or a loud speaker, e.g. on a smart phone, may be used for transmitting the encoded configuration to the sensor device.. Accordingly, the configuration may be received, by the sensor device, encoded into soundwaves, light or radio frequencies. The configuration may be received from a user device, or any other device that stores the configuration or has access to the configuration and is capable of encoding the configuration into light, soundwaves or radio frequencies. Examples of methods for encoding the configuration comprise at least analog or digital encoding techniques which may follow a suitable encoding scheme. Examples of the encoding schemes comprise at least Morse coding, analog modulation techniques and digital modulation techniques. Examples of the modulation techniques comprise Amplitude Modulation (AM), Frequency Modulation (FM), Quadrature Amplitude Modulation (QAM), Frequency Shift Keying (FSK), Amplitude Shift Keying (ASK), Phase Shift Keying (PSK) techniques such as Binary PSK, Quadrature PSK, 8PSK and 16PSK.

In an example, phase 204 comprises that the configuration is received included to a transmission comprising the configuration and at least one of a preamble part and a trailing part. The preamble part may cause the sensor device to determine that the transmission is about configuring the sensor device and the transmission includes the configuration. Then, after detecting the preamble part, the sensor device may enter the configuration mode, where the configuration may be received. The trailing part of the transmission may cause the sensor device to determine an end of the transmission. After the end of the transmission has been detected, the sensor device may perform an integrity check of the received configuration and install the configuration. After the configuration has been installed the sensor device may exit the configuration mode to the normal operation mode, or in general to another operation mode of the sensor device.

Referring to Fig. 3 the method may be performed by a sensor device described with Fig. 1. The method provides configuring the sensor device without necessarily using or needing any buttons on the sensor device after the sensor device is in a configuration mode. The sensor device may comprise an input device configured to receive tactile user input, a display device and a processor operatively connected to the input device and the display device, whereby phases of the method may be caused by the processor.

Phase 302 may be performed as described with phase 202.

Phase 304 comprises adjusting one or more configuration values for the temperature monitoring operation based on a tilt of the sensor device determined by a tilting sensor of the sensor device. In an example, the tilt may be to a specific direction that may be defined in a coordinate system. Therefore, adjusting of the one or more configuration values may be provided if a tilt of the sensor device to a specific direction parallel to a coordinate axis of the coordinate system is determined. An example of the coordinate system is a cartesian coordinate system. A tilting sensor may be operatively connected to the processor for determining the tilt of the sensor device. Examples of the tilting sensor comprise a gyroscope, an accelerometer and an arrangement of a plurality of accelerometers. More than one accelerometer may be preferred for determining a tilting direction more accurately.

In an example, in phase 304, a selected configuration value may be increased based on a tilt of the sensor device in one direction and the selected configuration value may be decreased based on a tilt of the sensor device in another directions. The directions for increasing the configuration value and decreasing the configuration value may be opposite directions for example in a cartesian coordinate system. When the tilt is determined, the configuration value may be adjusted with a constant speed or a variable speed. The speed of adjustment may be increased based on a time of the tilt and/or an amount of the tilt. For example, when the sensor device has been tilted for more than a threshold time, the speed of adjustment may be increased. Alternatively or additionally, when the sensor device has been tilted for more than a threshold amount of the tilt, the speed of adjustment may be increased. The amount of the tilt may be measured based on a displacement of the sensor device in degrees from a starting position. The starting position may be e.g. a position, where a display of the sensor device is upwards or where a position of the sensor device, when entering the configuration mode. Accordingly, the starting position may also be determined based on the tilt.

In an example, in phase 304, when more than one configuration values are adjusted, one configuration value may be adjusted at a time. The configuration value that is adjusted may be selected for example based on receiving a tactile user input by the user input device. When the sensor device in the configuration mode, the tactile user input received by the user input device may cause traversing all the configuration values. Accordingly, when one configuration is selected, another configuration value may be selected based on the tactile user input. If the selected configuration value is the last one, the sensor device may exit the configuration mode after the last configuration has been adjusted based on tilting the sensor device. It should be noted that the last configuration value may the configuration value that is adjusted the last, when the configuration values are traversed in order. The order of the configuration values may be a predefined sequence of the configuration values.

Phase 306 comprises displaying information indicating at least one configuration phase of sensor device. In this way the at least one configuration phase may be read by a user and/or by a user device. Examples of the configuration phase comprise a completed configuration of the sensor device and an uncompleted, or a partial, configuration of the sensor device.

In an example a completed configuration may comprise that all configuration values have been adjusted in phase 304. In an example an uncompleted, or a partial, configuration of the configuration may comprise that a part of the configuration values have been adjusted in phase 304.

In an example in accordance with at least some embodiments, phase 306 comprises that the information indicating the at least one configuration phase, comprises at least one of an identifier of the sensor device, an indicator for an updated configuration for the temperature monitoring operation and one or more configuration values for the temperature monitoring operation.

According to the invention, phase 306 comprises generating an optical code based on the information indicating the at least one configuration phase of the sensor device. In this way the optical code serves as information indicating the configuration phase. The optical code comprises a bar code or a QR-code. Embodiments of the configuration phase comprise a completed configuration of the sensor device and an uncompleted, or a partial, configuration of the sensor device.

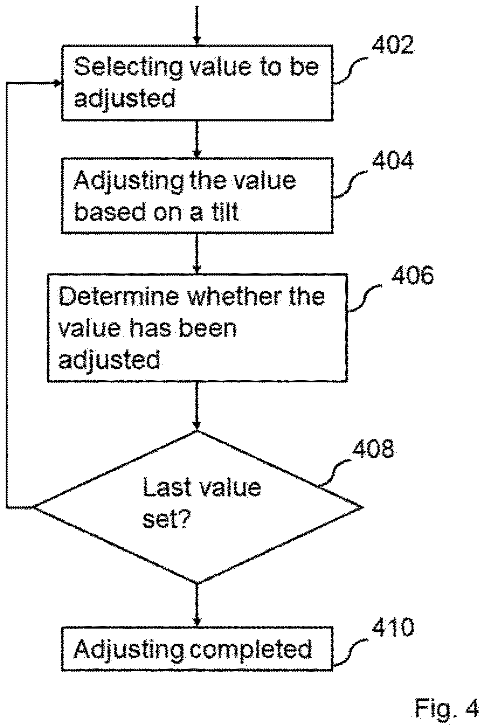

Referring to Fig. 4 the method may be performed in connection with one or more phases of Fig. 3. The method comprises phases 402 to 404 of adjusting the one or more configuration values one at a time based on the tilt and phases 406 to 408 of determining whether to continue adjusting the configuration values or not. If it is determined in phase 408 that adjusting of the configuration values is continued, the phases 402 to 408 may be repeated. In an example, phase 404 comprises adjusting a selected configuration value in accordance to described with phase 304. Phase 406 comprises determining if the configuration value has been adjusted. The last value may be the last value in an order of the configuration values. The order of the configuration values may be a predefined sequence of the configuration values and the configuration values may be adjusted, one at a time, based on the predefined sequence. Phase 408 may comprise determining that the last value of the one or more configuration values has been adjusted, i.e. the adjusting is discontinued, and the method may proceed to phase 410. On the other hand phase 408 may comprise determining to continue adjusting the configuration values, e.g. that not all of the configuration values have been adjusted, and the method may proceed to phase 402. Phase 410 comprises that adjusting of the configuration values may be determined to be completed. Accordingly, the last value of the one or more configuration values has been adjusted, whereby all the configuration values have been adjusted. It should be noted that in repeating phases 402 to 408, the configuration values may be adjusted in any order, whereby eventually one configuration value is the last configuration value that is unadjusted. Then, the method may proceed from phase 408 to phase 410, after the last value has been adjusted. In an example, phase 402 comprises selecting a configuration value to be adjusted. The configuration value may be selected from a plurality of configuration values. Examples of the configuration values comprise at least one of a threshold temperature, a minimum temperature threshold, a maximum temperature threshold and an initial delay for the temperature monitoring operation. The selected configuration value may be a configuration value that has not been adjusted after the sensor device has entered the configuration mode. It should be noted that the phases 402 to 410 illustrates only one occasion of adjusting the configuration values, which may be repeated.

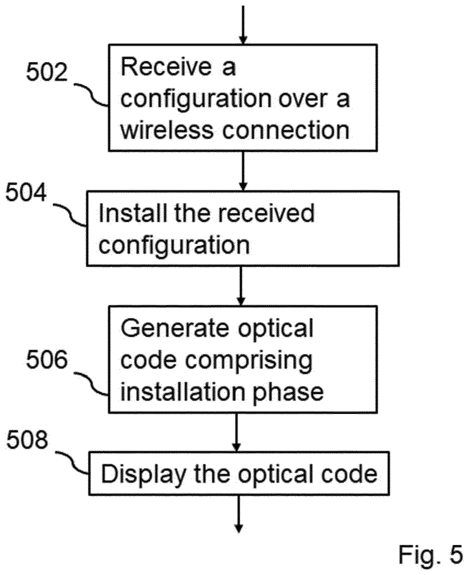

Referring to Fig. 5 the method may be performed in connection with one or more phases of Fig. 2. The method provides configuring the sensor device in a configuration mode without use of buttons.

Phase 502 comprises receiving a configuration in accordance with phase 204.

Phase 504 comprises installing the received configuration in accordance with phase 206.

Phase 506 comprises generating an optical code based on information indicating at least one installation phase. In this way the optical code may serve for information indicating the installation phase.

According to the invention, in phase 506, the optical code may be generated to encode the installation phase of the configuration. The optical code may be a bar code or a QR-code. Embodiments of the installation phase comprise completed installation and an uncompleted installation of the configuration.

Phase 508 comprises displaying the optical code. In this way information indicating at least installation phase may be displayed in accordance with phase 208.

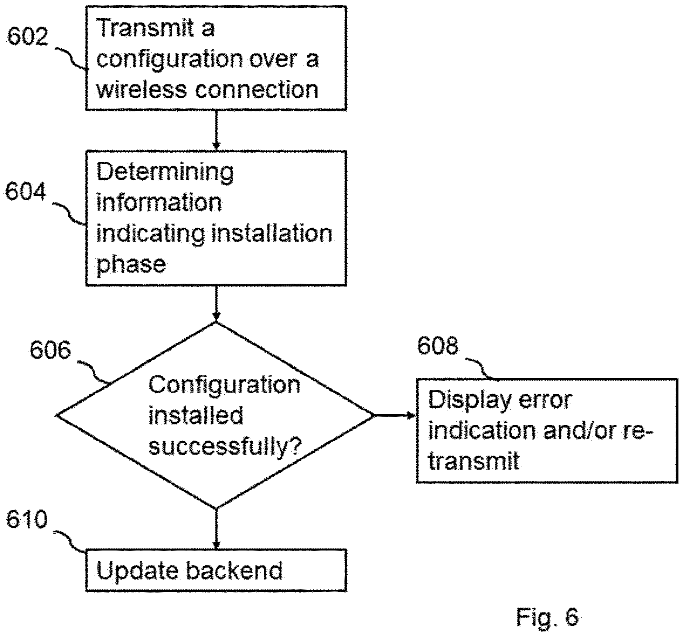

Referring to Fig. 6 the method may be performed by a user device described with Fig. 1. The method supports verification of configuration of the sensor device. The user device may comprise a processor operatively connected to a wireless transmitter and a digital camera.

Phase 602 comprises transmitting a configuration for the temperature monitoring operation to the sensor device. The user device may comprise transmitter for wireless communications, or a wireless transmitter, operatively connected to the processor and the configuration may be transmitted by the transmitter over a wireless communications channel. The wireless communications channel may be a direct communications channel, or a device-to-device connection.

Phase 604 comprises determining information indicating at least one installation phase of the configuration. According to the invention, phase 604 comprises obtaining, by the user device, a digital image of information displayed on a sensor device for temperature regulated transportation, and determining, by the user device, based on the digital image that the digital image comprises information indicating the at least one installation phase of the configuration for the temperature monitoring operation. The digital image may be obtained, or captured, from the information displayed on the sensor device for example in connection with phase 208 or 508.

In an embodiment the information indicating the at least one installation phase in phase 604, comprises at least one of an identifier of the sensor device, an indicator for an updated configuration for the temperature monitoring operation and one or more configuration values for the temperature monitoring operation.

Phase 606 comprises determining based on the determined information indicating at least one installation phase that the at least one installation phase comprises a completed installation, e.g. a successful installation, of the configuration or an uncompleted installation of the configuration. If the at least one installation phase comprises a completed installation, phase 610 is performed, comprising transmitting, by the user device, the configuration to the backend system, based on the completed installation or the completed configuration. In this way the backend system may be updated with the configuration that is currently installed to the sensor device and the backend system may then verify that the sensor device is correctly configured. If the at least one installation phase comprises an uncompleted installation, phase 608 is performed, comprising: re-transmitting, by the user device, the configuration to the sensor device, and/or causing to display, by the user device, information indicating the uncompleted installation. In this way installation of the configuration may be retried and/or the user may be notified about the uncompleted installation.

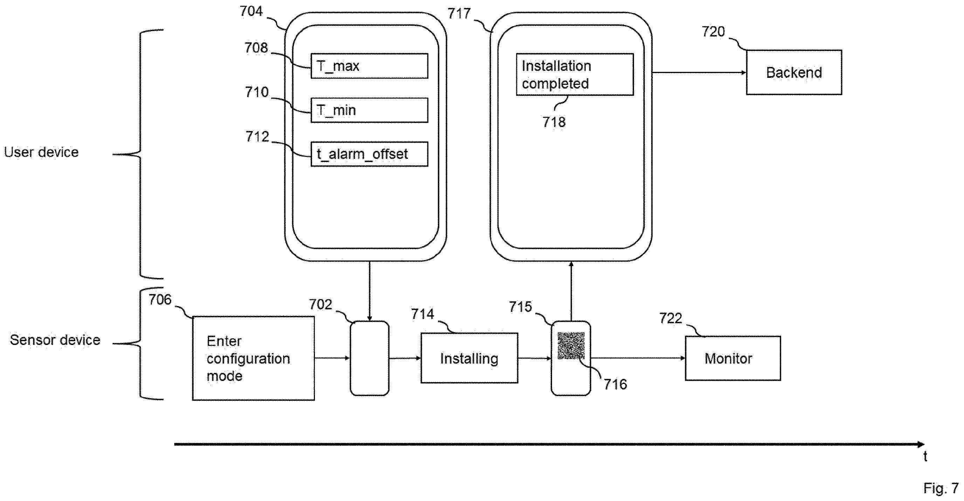

Fig. 7 illustrates an example of configuring a temperature monitoring operation of a sensor device by installing configuration to the sensor device in accordance with at least some embodiments. The example may be performed at least by a sensor device and user device described with Fig. 1. The example is illustrated by a sequence starting at phase 706 comprising the sensor device entering a configuration mode in accordance with phase 202. Phase 702 comprises receiving by the sensor device a configuration for the temperature monitoring operation from the user device 704 in accordance with phase 204. The configuration may comprise one or more configuration values comprising at least one of a threshold temperature, a minimum temperature threshold 710, a maximum temperature threshold 708 and an initial delay 712 for the temperature monitoring operation. In an example, the one or more configuration values may set by a user via a user interface of the user device. The user interface may comprise one or more input fields, where the user may enter the configuration values. A single input field may be provided for receiving from the user more than one or even all of the configuration values. The configuration values may be input in the single input field one at a time. The user interface may display information associated with the single input field such that the user may be guided which configuration value to enter to the input field at a time. On the other hand each configuration value may have its own input field. Also in such a case, the user interface may display information associated with each of the input fields such that the user may be guided which configuration value to enter to each of the input fields. Phase 714 comprises installing, at the sensor device, the received configuration on the sensor device in accordance with phase 206. Phase 715 comprises displaying, by the sensor device, information indicating at least one installation phase of the sensor device in accordance with phase 208. The displayed information may be an optical code 716. Phase 717 may comprise capturing, by the user device, a digital image of the information displayed by the sensor device in phase 715 and determining, by the user device, based on the captured digital image that the digital image comprises information indicating at least one installation phase for the temperature monitoring operation. The at least one installation phase for the temperature monitoring operation may comprise a completed installation of the sensor device and the installation phase may be displayed by the user device. The sensor device may display information indicating a completed installation 718 of the sensor device if the at least one installation phase comprises a completed installation of the sensor device, whereby the displayed information may be captured by the user device in phase 717. On the other hand, the sensor device may display information indicating an uncompleted installation of the sensor device if the at least one installation phase comprises an uncompleted installation of the sensor device. Phase 717 may further comprise transmitting, by the user device, the configuration to a backend system 720 based on the completed installation of the configuration of the sensor device. In this way the backend system may verify configuration of the sensor device. Phase 722 may comprise the sensor device monitoring temperature based on the configuration installed in phase 714. The monitoring may be performed after an exit from the configuration mode, e.g. an exit from the configuration mode to a normal operation mode of the sensor device.

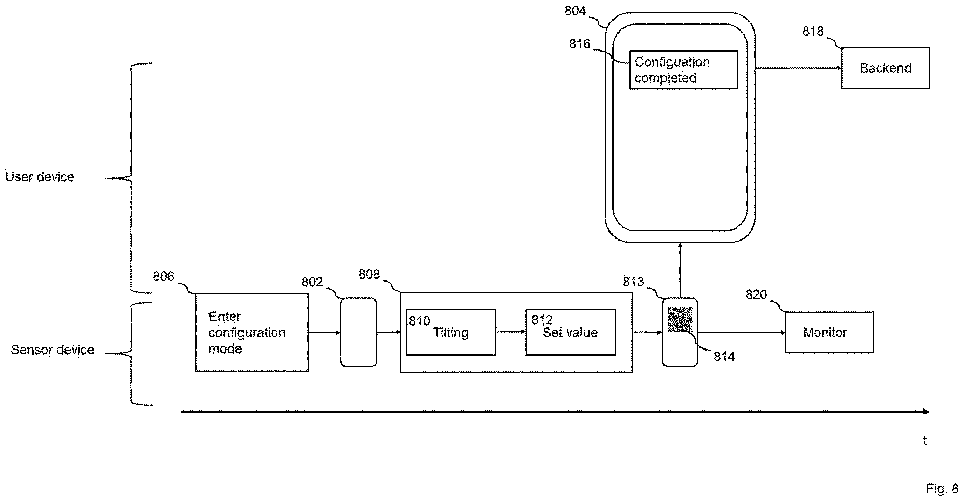

Fig. 8 illustrates an example of configuring a temperature monitoring operation of a sensor device by tilting the sensor device in accordance with at least some embodiments. The example may be performed at least by a sensor device and user device described with Fig. 1. The example is illustrated by a sequence starting at phase 806 comprising the sensor device entering a configuration mode in accordance with phase 302. Phase 802 comprises that the sensor device is in the configuration mode and one or more configuration values for the temperature monitoring operation may be adjusted based on a tilt of the sensor device in accordance with phase 304. Phase 808 comprises adjusting the one or more configuration values based on determining 810 a user tilting the sensor device and setting 812 the configuration values to values determined based on the tilting. The configuration values may be adjusted, at the sensor device, one by one in phase 808. Phase 813 comprises displaying, by the sensor device, information indicating at least one configuration phase of the sensor device in accordance with phase 306. The displayed information may be an optical code 814. Phase 820 may comprise the sensor device monitoring temperature based on the configuration values set in phase 808. The monitoring may be performed after an exit from the configuration mode, e.g. an exit from the configuration mode to a normal operation mode of the sensor device. Phase 804 may comprise capturing, by the user device, a digital image of the information displayed by the sensor device in phase 813 and determining, by the user device, based on the digital image that the digital image comprises information indicating at least one configuration phase for the temperature monitoring operation. The sensor device may display information 816 indicating a completed configuration of the sensor device if the at least one configuration phase comprises a completed configuration of the sensor device. On the other hand, the sensor device may display information 816 indicating an uncompleted configuration of the sensor device if the at least one configuration phase comprises an uncompleted configuration of the sensor device. Phase 804 may comprise transmitting the configuration to a backend system 818 based on the completed configuration of the sensor device.

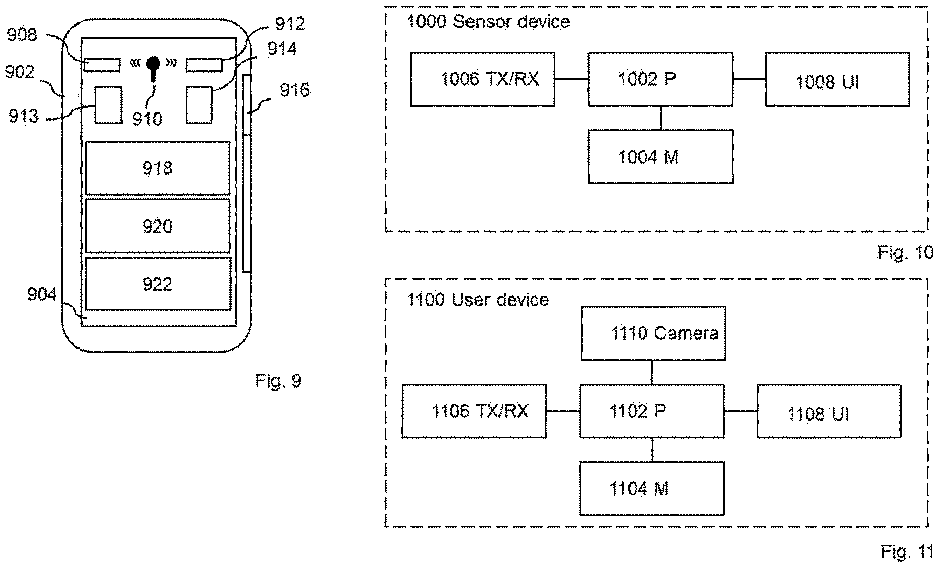

Fig. 9 illustrates an example of a user interface of a sensor device in accordance with at least some embodiments. The user interface is described in connection with a temperature monitoring operation performed by the sensor device e.g. in connection with a temperature regulated transportation. The sensor device 902 may be the sensor device described in Fig. 1. The user interface may be an e-ink display 904. The e-ink display refers to a display that reflects light like paper, whereby information displayed on the e-ink display mimics the appearance of ordinary ink on paper. The e-ink display may also be referred to an electronic paper or an electrophoretic display. The information displayed on the user interface may comprise one or more information elements for example, graphics, geometric shapes, numbers and/or letters. The information elements may comprise an indicator 908 for an operation mode of the sensor device, an indicator 912 for a battery charge status of the sensor device, an indicator 910 for a connection status of a wireless connection of the sensor device to a wireless communications system, an indicator 918 for a current temperature measured by the sensor device, an indicator 920 for a maximum temperature threshold and an indicator 922 for a minimum temperature threshold. One or more of the indicator 918 for a current temperature measured by the sensor device, the indicator 920 for a maximum temperature threshold and the indicator 922 for a minimum temperature threshold may have at least two display modes. In one of the display modes the indicator may be highlighted and in another display mode the indicator may be displayed without a highlighting. Each of the indicators may have their own display modes, whereby they may be controlled at least partially independently from each other. In this example, the display modes may be controlled based on evaluating the temperature measurements performed by the sensor device during the temperature monitoring operation with respect to the minimum temperature threshold and the maximum temperature threshold. The maximum temperature threshold and the corresponding indicator 920 provide that the user interface may provide information that the maximum temperature has been exceeded. The minimum temperature threshold and the corresponding indicator 922 provide that the user interface may provide information that the minimum temperature has been exceeded. Accordingly, the user interface may indicate the user occurrences of undesirable temperature conditions measured by the sensor device during the temperature monitoring. Although in this example occurrences of the undesirable temperature conditions comprise a temperature measured by the temperature measuring device exceeding the maximum temperature threshold and a temperature measured by the temperature measuring device passing under the minimum temperature threshold, it should be noted that also other occurrences of the undesirable temperature conditions and a different number of occurrences of the undesirable temperature conditions may be used.

In an example, a first display mode of the indicator 918 may comprise that a most recent measurement of a temperature by the sensor device, i.e. a current temperature, is displayed. A first display mode of the indicator 920 may comprise that the maximum threshold set by installation of a configuration or tilting of the sensor device is displayed. A first display mode of the indicator 922 may comprise that the minimum threshold set by installation of a configuration or tilting of the sensor device is displayed. A second display mode of the indicator 918 may comprise that the indicator 918 is highlighted. A second display mode of the indicator 920 may comprise that the indicator 920 is highlighted. A second display mode of the indicator 922 may comprise that the indicator 922 is highlighted. It should be noted that highlighted displaying of an indicator may comprise at least that a color and/or text is added to the indicator for informing the user that the sensor device has measured a temperature that does not meet one or more product specific regulations. Therefore, when highlighting is applied to the indicator 918, the user may learn the current temperature and that the current temperature is not in accordance with the product specific regulations. This means that at least one undesirable temperature condition, e.g. the current temperature exceeding the maximum temperature threshold or the current temperature passing below the minimum temperature threshold, has been detected. Therefore, when highlighting is applied to the indicator 920, the user may learn the maximum threshold and that the maximum threshold has been exceeded. Therefore, when highlighting is applied to the indicator 922, the user may learn the minimum threshold and that the minimum threshold has been exceeded. When the indicator 918 for current temperature is highlighted in connection, e.g. at the same time, with one of the indicators 920 and 922, the user may learn that the threshold displayed by the highlighted indicator 920, 922 has been exceeded and also the current temperature that exceeds the threshold indicated by the highlighted indicator 920, 922. It should be noted that the current temperature may be lower than the exceeded threshold temperature. Then, the indicator 918 may not be highlighted but the indicators 920, 922 may be highlighted to notify the user that a threshold corresponding to the highlighted indicator has been exceeded during the temperature monitoring operation performed by the sensor device. Furthermore, if none of the indicators 918,920, 920 is highlighted, the user may learn the current temperature from indicator 918 and that previous temperature measurements performed during the temperature monitoring operation are in accordance with the product specific regulations.

In an example, in accordance with at least some embodiments, the sensor device is caused to display a first indicator 918 for a current temperature measured by the sensor device, display at least one of a second indicator 920 and a third indicator 922, and highlight the first indicator 918 based on continuously determining, at the sensor device, whether one or more criteria set based on the installation of the configuration or the tilting of the sensor device have been met during the temperature monitoring operation of the sensor device, and highlight each of the at least second indicator and the third indicator until an end of the temperature monitoring operation, based on that the first indicator has been highlighted. In an example, continuously determining whether at least one criterion for highlighting the indicator 918 has been met during the temperature monitoring operation may at least comprise that the at least criterion is checked periodically. Examples of time periods for determining whether at least one criterion for highlighting the indicator 918 has been met may be any of 30s, 60s, 1 min, 5 min, 10 min, 30 min, 1h , 3h, 6h, 9h, 12h, 16h, 19h, 22h, 24h for example. In an example, the indicator 918 may be highlighted based on both the maximum temperature threshold and the minimum temperature threshold being met, thus two criteria, whereby the indicator 920 may be highlighted based on the one of the two criteria, e.g. the maximum temperature threshold being met, and the indicator 922 may be highlighted based on the one of the two criteria, e.g. the minimum temperature threshold being met. Therefore, the criteria for highlighting the indicators of the user interface may be controlled based on the installation of the configuration and the adjusted configuration values. in an example, the end of the temperature monitoring operation may be determined based on receiving user input by the sensor device.

Fig. 10 illustrates an example of a block diagram of a sensor device 1000 in accordance with at least some embodiments. The sensor device comprises a user interface 1008, memory 1004, at least one sensor 1010 and a transceiver 1006, or at least a receiver, operatively connected to a processor 1002. The memory 1004 may store a computer program or computer instructions that may be executed by the processor for causing the sensor device to perform one or more functionalities described in an example described herein. Examples of the memory comprise a computer readable memory or a non-transitory computer readable medium. The at least sensor 1010 may comprise a temperature sensor. optionally further sensors may be provided, e.g. a humidity sensor. The at least one sensor provides temperature readings for a temperature monitoring operation of the sensor device. The temperature readings may be obtained at least during the temperature monitoring operation that may be performed in accordance with the configuration of the sensor device determined using a configuration mode.

The user interface 1008 may comprise an input device configured to receive tactile user input and a display device. The input device may be operatively connected to the processor. In an example the user interface may comprise a touch screen for displaying information to a user and receiving input from the user. In another example, the display device may be an e-ink display, e.g. described with Fig. 9, and the input device may be a slide switch. The slide switch may be coupled by an inductive coupling or a magnetic coupling to inside of a housing of the sensor device comprising the processor. In an example, the slide switch comprises a user portion that is on an outer surface of the housing and a processor portion that is located inside the housing. The user portion is movable by a user to at least two positions, whereby a change of a position of the user portion from one position to the other and vice versa may be detected by the processor portion based on inductive coupling or magnetic coupling of the user portion with the processor portion. The processor portion connects the slide switch operatively with the processor, whereby the processor may obtain information of a change of the position of the slide switch and/or detect a current position of the slide switch.

In an example, the sensor device 1000 may have a waterproof housing. The waterproof housing supports reliability of the sensor device against harsh environmental conditions. The waterproof housing may be formed of parts that are connected together, e.g. by ultrasonic welding, into a single block. The waterproof housing may comprise a solid outer surface formed by a lower housing portion, an upper housing portion and a user interface 1008 connected to at least one of the upper or lower housing portions. The upper housing portion and the lower housing portion may form a groove on the outer surface of the housing when the upper housing portion and the lower housing portion are connected together. The groove may be configured for embedding the input device configured to receive tactile user input movably on the outer surface of the waterproof housing. The input device may be movable by a user sliding the user input device, or at least a part of the user input device, by fingers. The user input device may be movable to different positions, e.g. at least two positions. In an example, the input device may be the slide switch, whereby the input device may be moved, e.g. sled, within the groove in a direction of an edge of the waterproof housing. The edge of the housing may extend in a direction that is parallel to the edges or surfaces of the upper and lower housing portions that are connected e.g. by the ultrasonic welding. Accordingly, the groove provides that the input device may be embedded movable to the outer surface of the waterproof housing.

In an example the transceiver 1006 may comprise a receiver or transceiver for communications of visible light and/or non-visible light, for short-range wireless radio communications and/or for communications of soundwaves. In an example, the transceiver comprises an optical receiver for receiving information, or data, encoded into wavelengths of visible light, e.g. from a camera flashlight, and/or encoded into wavelengths of non-visible light. In an example, the transceiver 1006 comprises a receiver for soundwaves travelling a medium, for example a microphone. The medium may be a gas mixture, e.g. the air, that permits travel of soundwaves from a wireless transmitter for communications of soundwaves, e.g. from a loudspeaker at a user device, to the transceiver at the sensor device. Examples of information, or data, received by the sensor device 1000 from a user device comprise a configuration for a temperature monitoring operation of the sensor device. The receiver for information, or data, encoded into wavelengths of visible light and/or non-visible light may be a light sensor. In an example, information, or data, encoded into visible and/or nonvisible light may be Morse coded.

It should be noted that the transceiver 1006 of the sensor device 1000 may further be configured for communications with a wireless communications system connected to a backend system. Examples of information, or data, transmitted by the sensor device to the backend system through the wireless communications system comprise measurement results of measurements performed by the sensor device. The measurement results of measurements performed by the sensor device may comprise measurements of temperature, i.e. temperature measurements. It should be noted that the functionalities of the transceiver for communications between the sensor device and the backend system may be implemented at least partially separate from the functionalities of the transceiver for communications between the sensor device and the user device.

Fig. 11 illustrates an example of a block diagram of a user device in accordance with at least some embodiments. The user device 1100 comprises a user interface 1108, memory 1104, a digital camera and a transceiver 1106, or at least a wireless transmitter, operatively connected to a processor 1102. The memory 1104 may store a computer program or computer instructions that may be executed by the processor for causing the user device to perform one or more functionalities described in an example described herein. Examples of the memory comprise a computer readable memory or a non-transitory computer readable medium.

In an example the user interface 1108 may comprise a touch screen for displaying information to a user and receiving input from the user. In an example, the transceiver 1106 comprises a wireless transmitter or transceiver for communications of visible light and/or non-visible light, for short-range wireless radio communications and/or for communications of soundwaves, with a sensor device. In an example, the wireless transmitter comprises a camera flashlight. The camera flashlight may be the camera flashlight of the digital camera 1110. In an example, the wireless transmitter comprises a transmitter, for example a loudspeaker, for transmitting soundwaves. The transmitted soundwaves may travel through a medium, e.g. a gas mixture, such as air, that permits travel of soundwaves from the transmitter at the user device, to a receiver, e.g. a microphone, at the sensor device.

The processor may encode information, or data, into visible light transmitted by the camera flashlight. Examples of information, or data, transmitted by the user device 1100 to a sensor device comprise a configuration for a temperature monitoring operation of the sensor device. Examples of information, or data, transmitted by the user device 1100 to a backend system comprises configuration of the sensor device, information indicating completed installation of the configuration and information indicating uncompleted installation of the configuration.

It should be noted that the transceiver 1106 of the user device 1100 may further be configured for communications with a backend system through a wireless communications system. Examples of information, or data, received by the user device from a backend system comprises information indicating a successful installation of a configuration of a sensor device, information indicating an unsuccessful installation of a configuration of a sensor device, information indicating a successful configuration of a sensor device, information indicating an unsuccessful configuration of a sensor device, information indicating a verified configuration of a sensor device and information indicating a non-verified configuration of a sensor device. Examples of information, or data, transmitted by the user device to a backend system comprises information indicating a configuration of the sensor device. It should be noted that the functionalities of the transceiver for communications between the user device and the backend system may be implemented at least partially separate from the functionalities of the transceiver for communications between the user device and the sensor device.

Examples of the user device comprise at least smart phones, tablet computers and other computing devices. Examples of the backend system comprise computing systems that may comprise one or more servers.

An example in accordance with at least some embodiments comprises a computer program comprising instructions which, when the program is executed by a processor of user device, cause the user device to carry out a method described in an example. The computer program may be stored on a computer-readable medium.

An example in accordance with at least some embodiments comprises a computer program comprising instructions which, when the program is executed by a processor of sensor device, cause the sensor device to carry out a method described in an example described herein. The computer program may be stored on a computer-readable medium.

An example of the computer program comprises a software application that is executable on an operating system of a user device. The user device may be a computing device, e.g. a smart phone. The software application may comprise instructions for causing the user device to transmit the configuration for a temperature monitoring operation to a sensor device using visible light and/or non-visible light, short-range wireless radio communications and/or soundwaves. Accordingly, the user device may comprise a wireless transmitter for short-range wireless radio communications, a wireless transmitter for visible light and/or non-visible light, and/or a wireless transmitter for soundwaves. The user device may control, based on the instructions, one or more of the wireless transmitters for transmitting the configuration for the temperature monitoring operation. In an example of using a combination of the different wireless transmitters for transmitting the configuration, the configuration is transmitted in a transmission comprising a preamble part and/or a trailing part. Then the preamble part may be transmitted using visible light and the configuration may be transmitted using soundwaves and the trailing part may be transmitted using visible light. The user device may comprise a loudspeaker and light source, e.g. a camera flashlight, that may be controlled by the instructions for transmitting the transmission/configuration to the sensor device. In another example, the user device may transmit the configuration and the optional preamble part and the trailing part over using a single wireless transmitter based on communications of visible light, communications of non-visible light, communications of soundwaves or short-range wireless radio communications.

In general, the various embodiments may be implemented in hardware or special purpose circuits or any combination thereof. While various aspects may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Implementation of devices and systems, for example a sensor device and a user device, described in an example may be performed by functional blocks that comprise hardware, software or a combination of hardware and software. One or more functionalities described in an example may be implemented in a single functional block or the functionalities may be implemented by separate functional blocks. A memory may be a computer readable medium that may be non-transitory. The memory may be of any type suitable to the local technical environment and may be implemented using any suitable data storage technology, such as semiconductor-based memory devices, magnetic memory devices and systems, optical memory devices and systems, fixed memory and removable memory. A processor may be of any type suitable to the local technical environment, and may include one or more of general purpose computers, special purpose computers, microprocessors, digital signal processors (DSPs) and processors based on multi-core processor architecture, as non-limiting examples.

## Claims

1. A sensor device, comprising:
an input device configured to receive tactile user input;
a display device; and
a processor operatively connected to the input device, and the display device, wherein the processor is configured to cause:
in response to receiving a tactile user input (202, 302) by the input device causing the sensor device to:
enter into a configuration mode for configuring a temperature monitoring operation of the sensor device, wherein the sensor device comprises at least two operation modes comprising the configuration mode and another operation mode for performing the temperature monitoring operation; and
a) wherein the sensor device comprises a receiver for wireless communications operatively connected to the processor, the processor is configured to cause:
- receive (204), by the sensor device during the configuration mode of the sensor device, a configuration for the temperature monitoring operation over a wireless communications channel;
- install (206), at the sensor device during the configuration mode of the sensor device, the received configuration;
- encode, at the sensor device during the configuration mode of the sensor device, at least one installation phase of the received configuration into a bar code or a QR-code, wherein the at least one installation phase is one of a completed installation of the configuration and an uncompleted, or a partial, installation of the configuration;
- display (208), at the sensor device during the configuration mode of the sensor device, the bar code or the QR-code for capturing by a user device; and
- monitor, by the sensor device after exiting the configuration mode and during the another operation mode, temperature based on the installed configuration;
or
b) wherein the sensor device comprises a tilting sensor operatively connected to the processor, the processor is configured to cause:
- adjust (304), at the sensor device during the configuration mode of the sensor device, one or more configuration values for the temperature monitoring operation based on a tilt of the sensor device determined by the tilting sensor device; and
- encode, at the sensor device during the configuration mode of the sensor device, at least one configuration phase of the sensor device into a bar code or a QR-code, wherein the at least one configuration phase is one of a completed configuration of the sensor device and uncompleted, or a partial, configuration of the sensor device;
- display (306), at the sensor device during the configuration mode of the sensor device, the bar code or the QR-code for capturing by a user device; and
- monitor, by the sensor device after exiting the configuration mode and during the another operation mode, temperature based on the adjusted configuration values.

2. The sensor device according to claim 1, wherein in b) the processor is configured to:
- adjust (304) the one or more configuration values one at a time based on the tilt, and
- determine that the one or more configuration values have been adjusted after a last value of the one or more configuration values has been adjusted.

3. The sensor device according to any of the preceding claims, wherein
- the configuration or the one or more configuration values comprise at least one of a threshold temperature, a minimum temperature threshold, a maximum temperature threshold and an initial delay for the temperature monitoring operation;
- the information indicating the at least one configuration phase or the at least one installation phase, comprises at least one of an identifier of the sensor device, an indicator for an updated configuration for the temperature monitoring operation and one or more configuration values for the temperature monitoring operation; and/or
- the receiver is a receiver or transceiver for communications of visible light and/or non-visible light, for short-range wireless radio communications and/or for communications of soundwaves.

4. The sensor device according to any of the preceding claims, wherein the input device is, for example a slide switch coupled by an inductive coupling or a magnetic coupling to inside of the housing comprising the processor, arranged on an outer surface of a housing of the sensor device and separated by the housing from inside of the sensor device.

5. The sensor device according to any of the preceding claims, configured to:
display an indicator for a current temperature measured by the sensor device;
display at least one of a maximum temperature threshold indicator and a minimum temperature threshold indicator; and
highlight the indicator for the current temperature measured by the sensor device based on continuously determining, at the sensor device, whether at least one of a maximum temperature threshold and a minimum temperature threshold set based on the installation of the configuration or the tilting of the sensor device have been met during the temperature monitoring operation of the sensor device; and
highlight the maximum temperature threshold indicator if the maximum temperature threshold has been exceeded and the minimum temperature threshold if the minimum temperature threshold indicator has been exceeded until an end of the temperature monitoring operation, based on that the indicator for the current temperature measured by the sensor device has been highlighted.

6. The sensor device according to any of the preceding claims, wherein the configuration mode is entered based on a transmission comprising the configuration and at least one of a preamble part and a trailing part.

7. A method for a sensor device according to claim 1, the method comprising:
- in response to receiving a tactile user input (202, 302) by the user input device, entering by the sensor device, into a configuration mode for configuring a temperature monitoring operation of the sensor device wherein the sensor device comprises at least two operation modes comprising the configuration mode and another operation mode for performing the temperature monitoring operation; and
a)
- receiving (204), by the sensor device during the configuration mode of the sensor device, a configuration for the temperature monitoring operation over a wireless communications channel;
- installing (206), at the sensor device during the configuration mode of the sensor device, the received configuration;
- encoding, at the sensor device during the configuration mode of the sensor device, at least one installation phase of the received configuration into a bar code or a QR-code, wherein the at least one installation phase is one of a completed installation of the configuration and an uncompleted, or a partial, installation of the configuration;
- display (208), at the sensor device during the configuration mode of the sensor device, the bar code or the QR-code for capturing by a user device; and
- monitor, by the sensor device after exiting the configuration mode and during the another operation mode, temperature based on the installed configuration;
or
b)
- adjusting (304), at the sensor device during the configuration mode of the sensor device, one or more configuration values for the temperature monitoring operation based on a tilt of the sensor device determined by the tilting sensor;
- encode, at the sensor device during the configuration mode of the sensor device, at least one configuration phase of the sensor device into a bar code or a QR-code, wherein the at least one configuration phase is one of a completed configuration of the sensor device and uncompleted, or a partial, configuration of the sensor device;
- and
- displaying (306), at the sensor device during the configuration mode of the sensor device, the bar code or the QR-code for capturing by a user device; and
- monitor, by the sensor device after exiting the configuration mode and during the another operation mode, temperature based on the adjusted configuration values.

8. A method for a user device comprising a processor operatively connected to a wireless transmitter and a digital camera, the method comprises:
- transmitting (602), by the user device, a configuration for the temperature monitoring operation to a sensor device;
- obtaining, by the user device, a digital image of a bar code or a QR code displayed on the sensor device;
- determining (604), by the user device, based on the digital image that the bar code or the QR code comprises information indicating at least one installation phase of a configuration of the sensor device or at least one configuration phase of the sensor device; and
- transmitting (610), by the user device, the configuration to a backend system, if (606) the at least one installation phase of a configuration of the sensor device comprises a completed installation or the at least one configuration phase of the sensor device comprises a completed configuration of the sensor device.

9. The method according to claim 8, comprising:
- transmitting, by the user device, the configuration for the temperature monitoring operation to the sensor device; and
- obtaining the digital image after transmission of the configuration.

10. The method according to any of claims 8 to 9, comprising:
wherein the installation phase comprises an uncompleted installation of the configuration, and the method comprises:
- re-transmitting, by the user device, the configuration to the sensor device; and/or
- causing to display, by the user device, information indicating the uncompleted installation.

11. The method according to any of claims 8 to 10, comprising:
wherein the installation phase comprises an uncompleted configuration of the sensor device, and the method comprises:
- causing to display, by the user device, information indicating the uncompleted configuration of the sensor device.

12. The method according to any of claims 8 to 11, comprising:
- receiving, by the user device, from the backend system, after transmitting the configuration to the backend system, information indicating whether an installation of the configuration to the sensor device has been successful; and
- causing to display, by the user device, based on the information received from the backend system an indicator for a successful installation of the configuration or an indicator for an unsuccessful installation of the configuration.

13. A user device for configuring a sensor device, comprising a processor operatively connected to a wireless transmitter and a digital camera, wherein the user device is configured to perform the method according to any of claims 8 to 12.

14. The user device according to claim 13, wherein the wireless transmitter is configured for communications of visible light and/or non-visible light, for example a camera flashlight, for short-range wireless radio communications and/or for communications of soundwaves, for example a loudspeaker.

15. A method for monitoring a sensor device by a user device, wherein the sensor device comprises:
- an input device configured to receive tactile user input,
- a display device,
- a processor operatively connected to the input device, and the display device; and
the user device comprises:
- a processor operatively connected to a wireless transmitter and a digital camera; wherein the method comprises:
- entering, by the sensor device, in response to receiving a tactile user input (202, 302) by the user input device, into a configuration mode for configuring a temperature monitoring operation of the sensor device, wherein the sensor device comprises at least two operation modes comprising the configuration mode and another operation mode for performing the temperature monitoring operation;
- transmitting (602), by the user device, a configuration for the temperature monitoring operation to the sensor device;
the method comprising:
- phases a), wherein the sensor device comprises a receiver for wireless communications operatively connected to the processor:
∘ receiving (204), by the sensor device during the configuration mode of the sensor device, a configuration for the temperature monitoring operation over a wireless communications channel;
∘ installing (206), at the sensor device during the configuration mode of the sensor device, the received configuration;
∘ encoding, at the sensor device during the configuration mode of the sensor device, at least one installation phase of the received configuration into a bar code or a QR-code, wherein the at least one installation phase is one of a completed installation of the configuration and an uncompleted, or a partial, installation of the configuration;
∘ displaying (208), at the sensor device during the configuration mode of the sensor device, the bar code or the QR-code for capturing by the user device; or
the method comprising
- phases b), wherein the sensor device comprises a tilting sensor operatively connected to the processor:
∘ adjusting (304), at the sensor device during the configuration mode of the sensor device, one or more configuration values for the temperature monitoring operation based on a tilt of the sensor device determined by the tilting sensor device; and
∘ encoding, at the sensor device during the configuration mode of the sensor device, at least one configuration phase of the sensor device into a bar code or a QR-code, wherein the at least one configuration phase is one of a completed configuration of the sensor device and uncompleted, or a partial, configuration of the sensor device;
∘ displaying (306), at the sensor device during the configuration mode of the sensor device, the bar code or the QR-code for capturing by the user device; and
∘ monitor, by the sensor device after exiting the configuration mode and during the another operation mode, temperature based on the adjusted configuration values; and
the method comprises:
∘ obtaining, by the user device, a digital image of information displayed on the sensor device;
∘ determining (604), by the user device, based on the digital image that the digital image comprises information indicating at least one installation phase of a configuration of the sensor device or at least one configuration phase of the sensor device; and
∘ transmitting (610), by the user device, the configuration to a backend system, if (606) the at least one installation phase of a configuration of the sensor device comprises a completed installation or the at least one configuration phase of the sensor device comprises a completed configuration of the sensor device.

## Patentansprüche

1. Sensorvorrichtung, umfassend:
ein Eingabegerät, das so konfiguriert ist, dass es taktile Benutzereingaben empfängt;
ein Anzeigegerät; und
einen Prozessor, der operativ mit dem Eingabegerät und
dem Anzeigegerät verbunden ist, wobei der Prozessor dazu konfiguriert ist, Folgendes zu bewirken:
als Reaktion auf Empfangen einer taktilen Benutzereingabe (202, 302) durch das Eingabegerät, was dazu führt, dass die Sensorvorrichtung Folgendes bewirkt:
in einen Konfigurationsmodus zum Konfigurieren eines Temperaturüberwachungsbetriebs der Sensorvorrichtung zu gelangen, wobei die Sensorvorrichtung mindestens zwei Betriebsmodi umfasst, die den Konfigurationsmodus und einen weiteren Betriebsmodus zum Durchführen des Temperaturüberwachungsvorgangs umfassen; und
a) wobei die Sensorvorrichtung einen Empfänger für drahtlose Kommunikation umfasst, der operativ mit dem Prozessor verbunden ist, wobei der Prozessor dazu konfiguriert ist, Folgendes zu bewirken:
- durch die Sensorvorrichtung während des Konfigurationsmodus der Sensorvorrichtung eine Konfiguration für den Temperaturüberwachungsvorgang über einen drahtlosen Kommunikationskanal zu empfangen (204);
- während des Konfigurationsmodus der Sensorvorrichtung die empfangene Konfiguration an der Sensorvorrichtung zu installieren (206);
- an der Sensorvorrichtung während des Konfigurationsmodus der Sensorvorrichtung mindestens eine Installationsphase der empfangenen Konfiguration in einen Barcode oder einen QR-Code zu kodieren, wobei es sich bei der mindestens einen Installationsphase um eine abgeschlossene Installation der Konfiguration oder eine unvollständige oder teilweise Installation der Konfiguration handelt;
- während des Konfigurationsmodus der Sensorvorrichtung den Barcode oder den QR-Code zur Erfassung durch ein Benutzergerät an der Sensorvorrichtung anzuzeigen (208); und
- durch die Sensorvorrichtung nach dem Verlassen des Konfigurationsmodus und während des anderen Betriebsmodus die Temperatur basierend auf der installierten Konfiguration zu überwachen;
oder
b) wobei die Sensorvorrichtung einen Neigungssensor umfasst, der operativ mit dem Prozessor verbunden ist, wobei der Prozessor dazu konfiguriert ist, Folgendes zu bewirken:
- an der Sensorvorrichtung während des Konfigurationsmodus der Sensorvorrichtung einen oder mehrere Konfigurationswerte für den Temperaturüberwachungsbetrieb basierend auf einer durch die Neigungssensorvorrichtung bestimmten Neigung der Sensorvorrichtung anzupassen (304); und
- an der Sensorvorrichtung während des Konfigurationsmodus der Sensorvorrichtung mindestens eine Konfigurationsphase der Sensorvorrichtung in einen Barcode oder einen QR-Code zu kodieren, wobei es sich bei der mindestens einen Konfigurationsphase um eine abgeschlossene Konfiguration der Sensorvorrichtung oder eine unvollständige oder teilweise Konfiguration der Sensorvorrichtung handelt;
- während des Konfigurationsmodus der Sensorvorrichtung den Barcode oder den QR-Code zur Erfassung durch ein Benutzergerät an der Sensorvorrichtung anzuzeigen (306); und
- durch die Sensorvorrichtung nach dem Verlassen des Konfigurationsmodus und während des anderen Betriebsmodus die Temperatur basierend auf den angepassten Konfigurationswerten zu überwachen.

2. Sensorvorrichtung nach Anspruch 1, wobei in b) der Prozessor dazu konfiguriert ist:
- den einen oder die mehreren Konfigurationswerte einzeln basierend auf der Neigung anzupassen (304), und
- zu bestimmen, dass der eine oder die mehreren Konfigurationswerte angepasst wurden, nachdem ein letzter Wert des einen oder der mehreren Konfigurationswerte angepasst wurde.

3. Sensorvorrichtung nach einem der vorhergehenden Ansprüche, wobei
- die Konfiguration oder der eine oder die mehreren Konfigurationswerte mindestens einen von einem Temperaturschwellenwert, einem minimalen Temperaturschwellenwert, einem maximalen Temperaturschwellenwert und einer anfänglichen Verzögerung für den Temperaturüberwachungsvorgang umfassen;
- die Informationen, die die mindestens eine Konfigurationsphase oder die mindestens eine Installationsphase angeben, mindestens eines von einer Kennung der Sensorvorrichtung, einem Indikator für eine aktualisierte Konfiguration für den Temperaturüberwachungsbetrieb und einem oder mehreren Konfigurationswerten für die Temperatur Überwachungsbetrieb umfassen; und/oder
- der Empfänger ein Empfänger oder Transceiver für die Kommunikation von sichtbarem und/oder nichtsichtbarem Licht für die drahtlose Funkkommunikation über kurze Entfernungen und/oder für die Kommunikation von Schallwellen ist.

4. Sensorvorrichtung nach einem der vorhergehenden Ansprüche, wobei die Eingabevorrichtung, beispielsweise ein Schiebeschalter, der über eine induktive Kopplung oder eine magnetische Kopplung mit dem Inneren des Gehäuses gekoppelt ist, das den Prozessor umfasst, an einer Außenfläche eines Gehäuses der Sensorvorrichtung angeordnet und durch das Gehäuse vom Inneren der Sensorvorrichtung getrennt ist.

5. Sensorvorrichtung nach einem der vorhergehenden Ansprüche, die dazu konfiguriert ist:
einen Indikator für eine aktuelle, von der Sensorvorrichtung gemessene Temperatur anzuzeigen;
mindestens einen Indikator von einem maximalen Temperaturschwellenwertindikator und einem minimalen Temperaturschwellenwertindikator anzuzeigen; und
den Indikator für die aktuelle, von der Sensoreinrichtung gemessene Temperatur anhand einer kontinuierlichen Bestimmung an der Sensoreinrichtung hervorzuheben, ob mindestens einer von einem maximalen Temperaturschwellenwert und einem minimalen Temperaturschwellenwert, die auf der Grundlage der Installation der Konfiguration oder der Neigung der Sensorvorrichtung festgelegt wurden, während des Temperaturüberwachungsvorgangs der Sensorvorrichtung erreicht wurde; und
den maximalen Temperaturschwellenwertindikator bei Überschreiten des maximalen Temperaturschwellenwerts und den minimalen Temperaturschwellenwert bei Überschreiten des minimalen Temperaturschwellenwertindikators bis zum Ende des Temperaturüberwachungsvorgangs basierend darauf hervorzuheben, dass der Indikator für die aktuell von der Sensorvorrichtung gemessene Temperatur hervorgehoben wurde.

6. Sensorvorrichtung nach einem der vorhergehenden Ansprüche, wobei der Konfigurationsmodus auf der Grundlage einer Übertragung eingegeben wird, die die Konfiguration und mindestens einen Präambelteil und einen Endteil umfasst.

7. Verfahren für eine Sensorvorrichtung nach Anspruch 1, wobei das Verfahren Folgendes umfasst:
- als Reaktion auf den Empfang einer taktilen Benutzereingabe (202, 302) durch das Benutzereingabegerät, Eintreten durch die Sensorvorrichtung in einen Konfigurationsmodus zum Konfigurieren eines Temperaturüberwachungsbetriebs der Sensorvorrichtung, wobei die Sensorvorrichtung mindestens zwei Betriebsmodi umfasst, die den Konfigurationsmodus und einen weiteren Betriebsmodus zum Durchführen des Temperaturüberwachungsvorgangs umfassen; und
a)
- Empfangen (204) durch die Sensorvorrichtung während des Konfigurationsmodus der Sensorvorrichtung einer Konfiguration für den Temperaturüberwachungsvorgang über einen drahtlosen Kommunikationskanal;
- Installieren (206) der empfangenen Konfiguration an der Sensorvorrichtung während des Konfigurationsmodus der Sensorvorrichtung;
- Kodieren, an der Sensorvorrichtung während des Konfigurationsmodus der Sensorvorrichtung, mindestens einer Installationsphase der empfangenen Konfiguration in einen Barcode oder einen QR-Code, wobei es sich bei der mindestens einen Installationsphase um eine abgeschlossene Installation der Konfiguration oder eine unvollständige oder teilweise Installation der Konfiguration handelt;
- Anzeigen (208) des Barcodes oder QR-Codes zur Erfassung durch ein Benutzergerät an der Sensorvorrichtung während des Konfigurationsmodus der Sensorvorrichtung; und
- Überwachen der Temperatur durch die Sensorvorrichtung nach dem Verlassen des Konfigurationsmodus und während des anderen Betriebsmodus basierend auf der installierten Konfiguration;
oder
b)
- Anpassen (304) an der Sensorvorrichtung während des Konfigurationsmodus der Sensorvorrichtung eines oder mehrerer Konfigurationswerte für den Temperaturüberwachungsvorgang basierend auf einer Neigung der Sensorvorrichtung, die durch den Neigungssensor bestimmt wird;
- Kodieren, an der Sensorvorrichtung während des Konfigurationsmodus der Sensorvorrichtung, mindestens einer Konfigurationsphase der Sensorvorrichtung in einen Barcode oder einen QR-Code, wobei es sich bei der mindestens einen Konfigurationsphase um eine abgeschlossene Konfiguration der Sensorvorrichtung oder eine unvollständige oder teilweise Konfiguration der Sensorvorrichtung handelt;
- und
- Anzeigen (306) des Barcodes oder QR-Codes zur Erfassung durch ein Benutzergerät an der Sensorvorrichtung während des Konfigurationsmodus der Sensorvorrichtung; und
- Überwachen der Temperatur durch die Sensorvorrichtung nach dem Verlassen des Konfigurationsmodus und während des anderen Betriebsmodus basierend auf den angepassten Konfigurationswerten.

8. Verfahren für ein Benutzergerät, das einen Prozessor umfasst, der operativ mit einem drahtlosen Sender und einer Digitalkamera verbunden ist, wobei das Verfahren Folgendes umfasst:
- Übertragen (602) einer Konfiguration für den Temperaturüberwachungsvorgang durch das Benutzergerät an eine Sensorvorrichtung;
- Erhalten eines digitalen Bildes eines Barcodes oder eines QR-Codes, der auf der Sensorvorrichtung angezeigt wird, durch das Benutzergerät;
- Bestimmen (604) durch das Benutzergerät auf Grundlage des digitalen Bildes, dass der Barcode oder der QR-Code Informationen umfasst, die mindestens eine Installationsphase einer Konfiguration der Sensorvorrichtung oder mindestens eine Konfigurationsphase der Sensorvorrichtung angeben; und
- Übertragen (610) der Konfiguration durch das Benutzergerät an ein Backend-System, wenn (606) die mindestens eine Installationsphase einer Konfiguration der Sensorvorrichtung eine abgeschlossene Installation umfasst oder die mindestens eine Konfigurationsphase der Sensorvorrichtung eine abgeschlossene Konfiguration der Sensorvorrichtung umfasst.

9. Verfahren nach Anspruch 8, umfassend:
- Übertragen der Konfiguration für den Temperaturüberwachungsvorgang durch das Benutzergerät an die Sensorvorrichtung; und
- Erhalten des digitalen Bildes nach Übertragung der Konfiguration.

10. Verfahren nach einem der Ansprüche 8 bis 9, umfassend:
wobei die Installationsphase eine unvollständige Installation der Konfiguration umfasst und das Verfahren Folgendes umfasst:
- erneutes Übertragen der Konfiguration durch das Benutzergerät an die Sensorvorrichtung; und/oder
- Veranlassen, dass auf dem Benutzergerät Informationen angezeigt werden, die auf die nicht abgeschlossene Installation hinweisen.

11. Verfahren nach einem der Ansprüche 8 bis 10, umfassend:
wobei die Installationsphase eine unvollständige Konfiguration der Sensorvorrichtung umfasst und das Verfahren Folgendes umfasst:
- Veranlassen, dass das Benutzergerät Informationen anzeigt, die auf die unvollständige Konfiguration der Sensorvorrichtung hinweisen.

12. Verfahren nach einem der Ansprüche 8 bis 11, umfassend:
- Empfangen von Informationen durch das Benutzergerät, die angeben, ob eine Installation der Konfiguration auf der Sensorvorrichtung erfolgreich war, vom Backend-System, nach Übertragung der Konfiguration an das Backend-System; und
- Veranlassen, dass das Benutzergerät basierend auf den vom Backend-System empfangenen Informationen einen Indikator für eine erfolgreiche Installation der Konfiguration oder einen Indikator für eine nicht erfolgreiche Installation der Konfiguration anzeigt.

13. Benutzergerät zum Konfigurieren einer Sensorvorrichtung, umfassend einen Prozessor, der operativ mit einem drahtlosen Sender und einer Digitalkamera verbunden ist, wobei das Benutzergerät dazu konfiguriert ist, das Verfahren nach einem der Ansprüche 8 bis 12 durchzuführen.

14. Benutzergerät nach Anspruch 13, wobei der drahtlose Sender für die Kommunikation von sichtbarem Licht und/oder nichtsichtbarem Licht, beispielsweise eine Kamerataschenlampe, für die drahtlose Kommunikation über kurze Entfernungen per Funk und/oder für die Kommunikation von Schallwellen, beispielsweise einen Lautsprecher, konfiguriert ist.

15. Verfahren zur Überwachung einer Sensorvorrichtung durch ein Benutzergerät, wobei die Sensorvorrichtung Folgendes umfasst:
- ein Eingabegerät, das zum Empfang taktiler Benutzereingaben konfiguriert ist,
- ein Anzeigegerät,
- einen Prozessor, der operativ mit dem Eingabegerät und dem Anzeigegerät verbunden ist; und
das Benutzergerät Folgendes umfasst:
- einen Prozessor, der operativ mit einem drahtlosen Sender und einer Digitalkamera verbunden ist; wobei das Verfahren Folgendes umfasst:
- Eintreten, durch die Sensorvorrichtung, als Reaktion auf den Empfang einer taktilen Benutzereingabe (202, 302) durch das Benutzereingabegerät, in einen Konfigurationsmodus zum Konfigurieren eines Temperaturüberwachungsvorgangs der Sensorvorrichtung, wobei die Sensorvorrichtung mindestens zwei Betriebsmodi umfasst, die den Konfigurationsmodus und einen weiteren Betriebsmodus zum Durchführen des Temperaturüberwachungsvorgangs umfassen;
- Übertragen (602) einer Konfiguration für den Temperaturüberwachungsvorgang durch das Benutzergerät an die Sensorvorrichtung;
wobei das Verfahren Folgendes umfasst:
- Phasen a), wobei die Sensorvorrichtung einen Empfänger für drahtlose Kommunikation umfasst, der operativ mit dem Prozessor verbunden ist:
∘ Empfangen (204) einer Konfiguration für den Temperaturüberwachungsvorgang durch die Sensorvorrichtung während des Konfigurationsmodus der Sensorvorrichtung über einen drahtlosen Kommunikationskanal;
∘ Installieren (206) der empfangenen Konfiguration an der Sensorvorrichtung während des Konfigurationsmodus der Sensorvorrichtung;
∘ Kodieren, an der Sensorvorrichtung während des Konfigurationsmodus der Sensorvorrichtung, mindestens einer Installationsphase der empfangenen Konfiguration in einen Barcode oder einen QR-Code, wobei es sich bei der mindestens einen Installationsphase um eine abgeschlossene Installation der Konfiguration oder eine unvollständige oder teilweise Installation der Konfiguration handelt;
∘ Anzeigen (208) des Barcodes oder QR-Codes zur Erfassung durch das Benutzergerät an der Sensorvorrichtung während des Konfigurationsmodus der Sensorvorrichtung; oder
wobei das Verfahren Folgendes umfasst
- Phasen b), wobei die Sensorvorrichtung einen Neigungssensor umfasst, der operativ mit dem Prozessor verbunden ist:
∘ Anpassen (304) an der Sensorvorrichtung während des Konfigurationsmodus der Sensorvorrichtung eines oder mehrerer Konfigurationswerte für den Temperaturüberwachungsvorgang basierend auf einer Neigung der Sensorvorrichtung, die durch die Neigungssensorvorrichtung bestimmt wird; und
∘ Kodieren, an der Sensorvorrichtung während des Konfigurationsmodus der Sensorvorrichtung, mindestens einer Konfigurationsphase der Sensorvorrichtung in einen Barcode oder einen QR-Code, wobei es sich bei der mindestens einen Konfigurationsphase um eine abgeschlossene Konfiguration der Sensorvorrichtung oder eine unvollständige oder teilweise Konfiguration der Sensorvorrichtung handelt;
∘ Anzeigen (306) des Barcodes oder QR-Codes zur Erfassung durch das Benutzergerät an der Sensorvorrichtung während des Konfigurationsmodus der Sensorvorrichtung; und
∘ Überwachen der Temperatur durch die Sensorvorrichtung nach dem Verlassen des Konfigurationsmodus und während des anderen Betriebsmodus basierend auf den angepassten Konfigurationswerten; und
das Verfahren Folgendes umfasst:
∘ Erhalten eines digitalen Bildes der auf der Sensorvorrichtung angezeigten Informationen durch das Benutzergerät;
∘ Bestimmen (604) durch das Benutzergerät basierend auf dem digitalen Bild, dass das digitale Bild Informationen umfasst, die mindestens eine Installationsphase einer Konfiguration der Sensorvorrichtung oder mindestens eine Konfigurationsphase der Sensorvorrichtung angeben; und
∘ Übertragen (610) der Konfiguration durch das Benutzergerät an ein Backend-System, wenn (606) die mindestens eine Installationsphase einer Konfiguration der Sensorvorrichtung eine abgeschlossene Installation umfasst oder die mindestens eine Konfigurationsphase der Sensorvorrichtung eine abgeschlossene Konfiguration der Sensorvorrichtung umfasst.

## Revendications

1. Dispositif de capteur comprenant :
un dispositif d'entrée configuré pour recevoir une entrée tactile d'utilisateur ;
un dispositif d'affichage ; et
un processeur connecté de manière fonctionnelle au dispositif d'entrée et au dispositif d'affichage, dans lequel le processeur est configuré pour amener à :
en réponse à la réception d'une entrée tactile d'utilisateur (202, 302) par le dispositif d'entrée, ce qui amène le dispositif de capteur à :
entrer dans un mode de configuration pour configurer une opération de surveillance de température du dispositif de capteur, dans lequel le dispositif de capteur comprend au moins deux modes de fonctionnement comprenant le mode de configuration et un autre mode de fonctionnement pour effectuer l'opération de surveillance de température ; et
a) dans lequel le dispositif de capteur comprend un récepteur pour une communication sans fil connecté de manière fonctionnelle au processeur, le processeur est configuré pour amener à :
- recevoir (204), par le dispositif de capteur pendant le mode de configuration du dispositif de capteur, une configuration pour l'opération de surveillance de température sur un canal de communication sans fil ;
- installer (206), au niveau du dispositif de capteur pendant le mode de configuration du dispositif de capteur, la configuration reçue ;
- coder, au niveau du dispositif de capteur pendant le mode de configuration du dispositif de capteur, au moins une phase d'installation de la configuration reçue en un code-barres ou un QR-code, dans lequel l'au moins une phase d'installation est l'une d'une installation achevée de la configuration et d'une installation inachevée ou partielle de la configuration ;
- afficher (208), au niveau du dispositif de capteur pendant le mode de configuration du dispositif de capteur, le code-barres ou le QR-code pour une capture par un dispositif utilisateur ; et
- surveiller, par le dispositif de capteur après la sortie du mode de configuration et pendant un autre mode de fonctionnement, la température sur la base de la configuration installée ;
ou
b) dans lequel le dispositif de capteur comprend un capteur d'inclinaison connecté de manière fonctionnelle au processeur, le processeur est configuré pour amener à :
- ajuster (304), au niveau du dispositif de capteur pendant le mode de configuration du dispositif de capteur, une ou plusieurs valeurs de configuration pour l'opération de surveillance de température sur la base d'une inclinaison du dispositif de capteur déterminée par le dispositif de capteur d'inclinaison ; et
- coder, au niveau du dispositif de capteur pendant le mode de configuration du dispositif de capteur, au moins une phase de configuration du dispositif de capteur en un code-barres ou un QR-code, dans lequel l'au moins une phase de configuration est l'une d'une configuration achevée du dispositif de capteur et d'une configuration inachevée ou partielle du dispositif de capteur ;
- afficher (306), au niveau du dispositif de capteur pendant le mode de configuration du dispositif de capteur, le code-barres ou le QR-code pour une capture par un dispositif utilisateur ; et
- surveiller, par le dispositif de capteur après la sortie du mode de configuration et pendant un autre mode de fonctionnement, la température sur la base des valeurs de configuration ajustées.

2. Dispositif de capteur selon la revendication 1, dans lequel en b) le processeur est configuré pour :
- ajuster (304) l'une ou les plusieurs valeurs de configuration, une à la fois, sur la base de l'inclinaison, et
- déterminer que l'une ou les plusieurs valeurs de configuration ont été ajustées après qu'une dernière valeur de l'une ou des plusieurs valeurs de configuration a été ajustée.

3. Dispositif de capteur selon l'une quelconque des revendications précédentes, dans lequel
- la configuration ou l'une ou les plusieurs valeurs de configuration comprennent au moins l'un d'un seuil de température, d'un seuil de température minimale, d'un seuil de température maximale et/ou d'un retard initial pour l'opération de surveillance de température ;
- les informations indiquant l'au moins une phase de configuration ou l'au moins une phase d'installation, comprennent au moins l'un d'un identifiant du dispositif de capteur, d'un indicateur d'une configuration mise à jour pour l'opération de surveillance de température et d'une ou plusieurs valeurs de configuration pour l'opération de surveillance de température ; et/ou
- le récepteur est un récepteur ou un émetteur-récepteur pour la communication de la lumière visible et/ou de la lumière non visible, pour une communication radio sans fil à courte portée et/ou pour une communication d'ondes sonores.

4. Dispositif de capteur selon l'une quelconque des revendications précédentes, dans lequel le dispositif d'entrée est, par exemple, un interrupteur à glissière couplé par un couplage inductif ou un couplage magnétique à l'intérieur du boîtier comprenant le processeur, disposé sur une surface externe d'un boîtier du dispositif de capteur et séparé par le boîtier de l'intérieur du dispositif de capteur.

5. Dispositif de capteur selon l'une quelconque des revendications précédentes, configuré pour :
afficher un indicateur pour une température actuelle mesurée par le dispositif de capteur ;
afficher au moins l'un d'un indicateur de seuil de température maximale et/ou d'un indicateur de seuil de température minimale ; et
mettre en évidence l'indicateur de la température actuelle mesurée par le dispositif de capteur sur la base de la détermination continue, au niveau du dispositif de capteur, qu'au moins l'un d'un seuil de température maximale et/ou d'un seuil de température minimale fixé sur la base de l'installation de la configuration ou de l'inclinaison du dispositif de capteur a été satisfait pendant l'opération de surveillance de température du dispositif de capteur ; et
mettre en évidence l'indicateur de seuil de température maximale si le seuil de température maximale a été dépassé et le seuil de température minimale si l'indicateur de seuil de température minimale a été dépassé jusqu'à la fin de l'opération de surveillance de température, sur la base du fait que l'indicateur de la température actuelle mesurée par le dispositif de capteur a été mis en évidence.

6. Dispositif de capteur selon l'une quelconque des revendications précédentes, dans lequel le mode de configuration est entré sur la base d'une transmission comprenant la configuration et au moins l'une d'une partie de préambule et d'une partie arrière.

7. Procédé pour un dispositif de capteur selon la revendication 1, le procédé comprenant :
- en réponse à la réception d'une entrée tactile d'utilisateur (202, 302) par le dispositif d'entrée utilisateur, l'entrée par le dispositif de capteur, dans un mode de configuration pour configurer une opération de surveillance de température du dispositif de capteur, dans lequel le dispositif de capteur comprend au moins deux modes de fonctionnement comprenant le mode de configuration et un autre mode de fonctionnement pour effectuer l'opération de surveillance de température ; et
a)
- la réception (204), par le dispositif de capteur pendant le mode de configuration du dispositif de capteur, d'une configuration pour l'opération de surveillance de température sur un canal de communication sans fil ;
- l'installation (206), au niveau du dispositif de capteur pendant le mode de configuration du dispositif de capteur, de la configuration reçue ;
- le codage, au niveau du dispositif de capteur pendant le mode de configuration du dispositif de capteur, d'au moins une phase d'installation de la configuration reçue en un code-barres ou un QR-code, dans lequel l'au moins une phase d'installation est l'une d'une installation achevée de la configuration et d'une installation inachevée ou partielle de la configuration ;
- l'affichage (208), au niveau du dispositif de capteur pendant le mode de configuration du dispositif de capteur, du code-barres ou du QR-code pour une capture par un dispositif utilisateur ; et
- la surveillance, par le dispositif de capteur après la sortie du mode de configuration et pendant un autre mode de fonctionnement, de la température sur la base de la configuration installée ;
ou
b)
- l'ajustement (304), au niveau du dispositif de capteur pendant le mode de configuration du dispositif de capteur, d'une ou plusieurs valeurs de configuration pour l'opération de surveillance de température sur la base d'une inclinaison du dispositif de capteur déterminée par le capteur d'inclinaison ;
- le codage, au niveau du dispositif de capteur pendant le mode de configuration du dispositif de capteur, d'au moins une phase de configuration du dispositif de capteur en un code-barres ou un QR-code, dans lequel l'au moins une phase de configuration est l'une d'une configuration achevée du dispositif de capteur et d'une configuration inachevée ou partielle du dispositif de capteur ;
- et
- l'affichage (306), au niveau du dispositif de capteur pendant le mode de configuration du dispositif de capteur, du code-barres ou du QR-code pour une capture par un dispositif utilisateur ; et
- la surveillance, par le dispositif de capteur après la sortie du mode de configuration et pendant un autre mode de fonctionnement, de la température sur la base des valeurs de configuration ajustées.

8. Procédé pour un dispositif utilisateur comprenant un processeur connecté de manière fonctionnelle à un émetteur sans fil et à un appareil photo numérique, le procédé comprend :
- la transmission (602), par le dispositif utilisateur, d'une configuration pour l'opération de surveillance de température à un dispositif de capteur ;
- l'obtention, par le dispositif utilisateur, d'une image numérique d'un code-barres ou d'un QR-code affiché sur le dispositif de capteur ;
- la détermination (604), par le dispositif utilisateur, sur la base de l'image numérique, que le code-barres ou le QR-code comprend des informations indiquant au moins une phase d'installation d'une configuration du dispositif de capteur ou au moins une phase de configuration du dispositif de capteur ; et
- la transmission (610), par le dispositif utilisateur, de la configuration à un système dorsal, si (606) l'au moins une phase d'installation d'une configuration du dispositif de capteur comprend une installation achevée ou l'au moins une phase de configuration du dispositif de capteur comprend une configuration achevée du dispositif de capteur.

9. Procédé selon la revendication 8, comprenant :
- la transmission, par le dispositif utilisateur, de la configuration pour l'opération de surveillance de température au dispositif de capteur ; et
- l'obtention de l'image numérique après transmission de la configuration.

10. Procédé selon l'une quelconque des revendications 8 et 9, comprenant :
dans lequel la phase d'installation comprend une installation inachevée de la configuration, et le procédé comprend :
- la retransmission, par le dispositif utilisateur, de la configuration au dispositif de capteur ; et/ou
- le fait d'amener l'affichage, par le dispositif utilisateur, d'informations indiquant l'installation inachevée.

11. Procédé selon l'une quelconque des revendications 8 à 10, comprenant :
dans lequel la phase d'installation comprend une configuration inachevée du dispositif de capteur, et le procédé comprend :
- le fait d'amener l'affichage, par le dispositif utilisateur, d'informations indiquant la configuration inachevée du dispositif de capteur.

12. Procédé selon l'une quelconque des revendications 8 à 11, comprenant :
- la réception, par le dispositif utilisateur, en provenance du système dorsal, après avoir transmis la configuration au système dorsal, d'informations indiquant si une installation de la configuration sur le dispositif de capteur a réussi ; et
- le fait d'amener l'affichage, par le dispositif utilisateur, sur la base des informations reçues du système dorsal, d'un indicateur d'installation réussie de la configuration ou d'un indicateur d'installation non réussie de la configuration.

13. Dispositif utilisateur pour configurer un dispositif de capteur, comprenant un processeur connecté de manière fonctionnelle à un émetteur sans fil et à un appareil photo numérique, dans lequel le dispositif utilisateur est configuré pour mettre en œuvre le procédé selon l'une quelconque des revendications 8 à 12.

14. Dispositif utilisateur selon la revendication 13, dans lequel l'émetteur sans fil est configuré pour une communication de lumière visible et/ou de lumière non visible, par exemple une lampe de poche d'appareil photo, pour une communication radio sans fil à courte portée et/ou pour une communication d'ondes sonores, par exemple un haut-parleur.

15. Procédé de surveillance d'un dispositif de capteur par un dispositif utilisateur, dans lequel le dispositif de capteur comprend :
- un dispositif d'entrée configuré pour recevoir une entrée tactile d'utilisateur,
- un dispositif d'affichage,
- un processeur connecté de manière fonctionnelle au dispositif d'entrée et au dispositif d'affichage ; et le dispositif utilisateur comprend :
- un processeur connecté de manière fonctionnelle à un émetteur sans fil et à un appareil photo numérique ; dans lequel le procédé comprend :
- l'entrée, par le dispositif de capteur, en réponse à la réception d'une entrée tactile d'utilisateur (202, 302) par le dispositif d'entrée utilisateur, dans un mode de configuration pour configurer une opération de surveillance de température du dispositif de capteur, dans lequel le dispositif de capteur comprend au moins deux modes de fonctionnement comprenant le mode de configuration et un autre mode de fonctionnement pour effectuer l'opération de surveillance de température ;
- la transmission (602), par le dispositif utilisateur, d'une configuration pour l'opération de surveillance de température au dispositif de capteur ;
le procédé comprenant :
- des phases a), dans lesquelles le dispositif de capteur comprend un récepteur de communication sans fil connecté de manière fonctionnelle au processeur :
o la réception (204), par le dispositif de capteur pendant le mode de configuration du dispositif de capteur, d'une configuration pour l'opération de surveillance de température sur un canal de communication sans fil ;
o l'installation (206), au niveau du dispositif de capteur pendant le mode de configuration du dispositif de capteur, de la configuration reçue ;
o le codage, au niveau du dispositif de capteur pendant le mode de configuration du dispositif de capteur, d'au moins une phase d'installation de la configuration reçue en un code-barres ou un QR-code, dans lequel l'au moins une phase d'installation est l'une d'une installation achevée de la configuration et d'une installation inachevée ou partielle de la configuration ;
o l'affichage (208), au niveau du dispositif de capteur pendant le mode de configuration du dispositif de capteur, du code-barres ou du QR-code pour une capture par le dispositif utilisateur ; ou
le procédé comprenant
- des phases b), dans lesquelles le dispositif de capteur comprend un capteur d'inclinaison connecté de manière fonctionnelle au processeur :
o l'ajustement (304), au niveau du dispositif de capteur pendant le mode de configuration du dispositif de capteur, d'une ou plusieurs valeurs de configuration pour l'opération de surveillance de température sur la base d'une inclinaison du dispositif de capteur déterminée par le dispositif de capteur d'inclinaison ; et
o le codage, au niveau du dispositif de capteur pendant le mode de configuration du dispositif de capteur, d'au moins une phase de configuration du dispositif de capteur en un code-barres ou un QR-code, dans lequel l'au moins une phase de configuration est l'une d'une configuration achevée du dispositif de capteur et d'une configuration inachevée ou partielle du dispositif de capteur ;
o l'affichage (306), au niveau du dispositif de capteur pendant le mode de configuration du dispositif de capteur, du code-barres ou du QR-code pour une capture par le dispositif utilisateur ; et
o la surveillance, par le dispositif de capteur après la sortie du mode de configuration et pendant un autre mode de fonctionnement, de la température sur la base des valeurs de configuration ajustées ; et
le procédé comprend :
o l'obtention, par le dispositif utilisateur, d'une image numérique des informations affichées sur le dispositif de capteur ;
o la détermination (604), par le dispositif utilisateur, sur la base de l'image numérique, que l'image numérique comprend des informations indiquant au moins une phase d'installation d'une configuration du dispositif de capteur ou au moins une phase de configuration du dispositif de capteur ; et
o la transmission (610), par le dispositif utilisateur, de la configuration à un système dorsal, si (606) l'au moins une phase d'installation d'une configuration du dispositif de capteur comprend une installation achevée ou l'au moins une phase de configuration du dispositif de capteur comprend une configuration achevée du dispositif de capteur.
